# EUROPÄISCHE PATENTANMELDUNG

(11) **EP 2 236 871 A1**
(43) Veröffentlichungstag der Anmeldung: **06.10.2010**
(21) Anmeldenummer: 10155117.4
(22) Anmeldetag: 02.03.2010
(51) Int. Cl.: F16K 1/20, F16K 1/22, F16K 1/24

(54) **Klappenventil**

(30) Priorität: 31.03.2009 DE 102009015183
(71) Anmelder: Pierburg GmbH, 41460 Neuss (DE)
(72) Erfinder: Tönnesmann, Andres, 52062, Aachen (DE); Brunetti, Costantino, 58730, Fröndenberg (DE); Köster, Andreas, 45149, Essen (DE); Grimm, Karsten, 52064, Aachen (DE)
(74) Vertreter: Patentanwälte ter Smitten

(57) **Zusammenfassung**

Klappenventil, insbesondere für Brennkraftmaschinen, mit einem Gehäuse, dass mindestens eine Einlassöffnung und mindestens eine Auslassöffnung (6) aufweist, wobei eine Verschlussklappe (2) exzentrisch im Gehäuse gelagert ist, und derart um eine Drehachse (3) schwenkbar ist, dass die Verschlussklappe (2) mit deren Anlagefläche (4) mit mindestens einem Ventilsitz (5) zusammenwirkt, wobei die zum Ventilsitz (5) gerichtete Anlagefläche (4) in einer gekrümmten Ebene verläuft, in derart, dass bei einem von der Drehachse (3) abgewandten Ventilsitz (5) die in Öffnungsrichtung weisende Seite (7) der Anlagefläche (4) einen größeren Abstand zur Drehachse (3) aufweist, als die in Schließrichtung weisende Seite (8) der Anlagefläche (4) und das bei einem der Drehachse (3) zugewandten Ventilsitz (5) die in Öffnungsrichtung weisende Seite der Anlagefläche (4) einen geringen Abstand zur Drehachse (3) aufweist als die in Schließrichtung weisende Seite der Anlagefläche (4).

## Beschreibung

Die Erfindung betrifft ein Klappenventil, insbesondere für Brennkraftmaschinen, mit einem Gehäuse, dass mindestens eine Einlassöffnung und mindestens eine Auslassöffnung aufweist, wobei eine Verschlussklappe exzentrisch im Gehäuse gelagert ist und derart um eine Drehachse schwenkbar ist, dass die Verschlussklappe mit deren Anlagefläche mit mindestens einem Ventilsitz zusammenwirkt.

Derartige Klappenventile sind hinlänglich bekannt. Sie werden als Drosselklappe, Abgasrückführventil, oder auch als Abgasklappe eingesetzt. Dabei zeigt beispielsweise die deutsche Druckschrift DE 10053850 A1 verschiedene Ausführungsformen eines derartigen Ventils. Aufgrund der durch das Prinzip des Exzenter-Ventils ausgeführten Dreh- und Hubbewegung soll ein derartiges Klappenventil unempfindlicher gegen Verschmutzung oder auch Verschleiß aufgrund Reibung beim Ventilöffnungs- oder Schließvorgangs sein. Um ein derartiges Ventil auch gegenüber deutlich schwankenden Temperaturen funktionssicher zu gestalten, schlägt die DE 10053850 A1 vor, die Ventilklappe über ein Gelenk mit dem Ventilgestänge zu verbinden, um so eine relative Bewegung zwischen Ventilklappe und Ventilsitz zu ermöglichen und auf diese Art und Weise einen selbstständigen Ausgleich von Abweichungen aufgrund von Fertigungsmängeln und/oder Wärmeausdehnungen aufzufangen. Jedoch ist auch diese Ausbildung einer Ventilklappe insbesondere beim Öffnungs- und Schließvorgang reibungsbedingt verschleißanfällig und ist das Problem der unterschiedlichen Wärmeausdehnung der einzelnen Teile durch die gelenkige Aufhängung der Ventilklappe immer noch nicht zufriedenstellend gelöst.

Daher liegt der Erfindung die Aufgabe zugrunde, die oben genannten Nachteile mit einem einfach aufgebauten Klappenventil zu vermeiden.

Diese Aufgabe wird dadurch gelöst, dass die zum Ventilsitz gerichtete Anlagefläche in einer gekrümmten Ebene verläuft, derart, dass bei einem von der Drehachse abgewandten Ventilsitz die in Öffnungsrichtung weisende Seite der Ablagefläche einen größeren Abstand zur Drehachse aufweist, als die in Schließrichtung weisende Seite der Anlagefläche und das bei einem der Drehachse zugewandten Ventilsitz die in Öffnungsrichtung weisende Seite der Anlagefläche einen geringeren Abstand zur Drehachse aufweist, als die in Schließrichtung weisende Seite der Anlagefläche.

Auf diese Weise wird ein Klappenventil geschaffen, dass auf besonders einfache Art und Weise herstellbar ist und bei dem insbesondere der Öffnungs- und Schließvorgang sicher und verschleißfrei erfolgt.

Dadurch, dass bei einem derartigen Klappenventil eine Strecke senkrecht von einem Punkt P der Drehachse zur Anlagefläche der Verschlussklappe eine ebene Kurve mit ständig größer werdendem Abstand beschreibt, wird eine Anlagefläche geschaffen, die einfach, kostengünstig und reproduzierbar herzustellen ist, und den Anforderungen hinsichtlich möglich geringerer Haftreibung im Öffnungs- und Schließvorgang genügt.

Dabei kann es insbesondere bei einem Einsatz mit hoher Wärmewirkung vorteilhaft sein, wenn die Kurve einen Abschnitt einer logarithmischen Spirale beschreibt. Auf diese Weise ist gewährleistet, dass jeder Punkt auf der Anlagefläche des Klappenventils beispielsweise beim Öffnen unter einem bestimmten Winkel vom Ventilsitz abhebt. Auf diese Art und Weise kann eine Stellvorrichtung, die das Klappenventil antreibt, besonders einfach auf die öffnungs- und Schließbedingungen abgestimmt werden. Des Weiteren ist gewährleistet, dass bei Wärmeeinwirkung auf das Klappenventil sich das Ventil selbstähnlich ausdehnt, dass heißt es bleibt Teil der selben logarithmischen Spirale. Dadurch passt sich die ausgedehnte Anlagefläche weiterhin dem Ventilsitz an, wobei sich lediglich im Schließwinkel ein geringer Winkelversatz einstellen kann.

Des Weiteren kann es vorteilhaft sein, dass der Ventilsitz und/oder die Anlagefläche eine Kunststoffbeschichtung aufweisen, um eine hohe Abdichtwirkung zu erzielen.

Ein Ausführungsbeispiel ist in den Zeichnungen dargestellt und wird nachfolgend beschrieben, dabei zeigt
Figur 1: ein Klappenventil mit Ventilsitz in schematischer Form und
Figur 2: perspektivische Ansicht eines erfindungsgemäßen Klappenventils

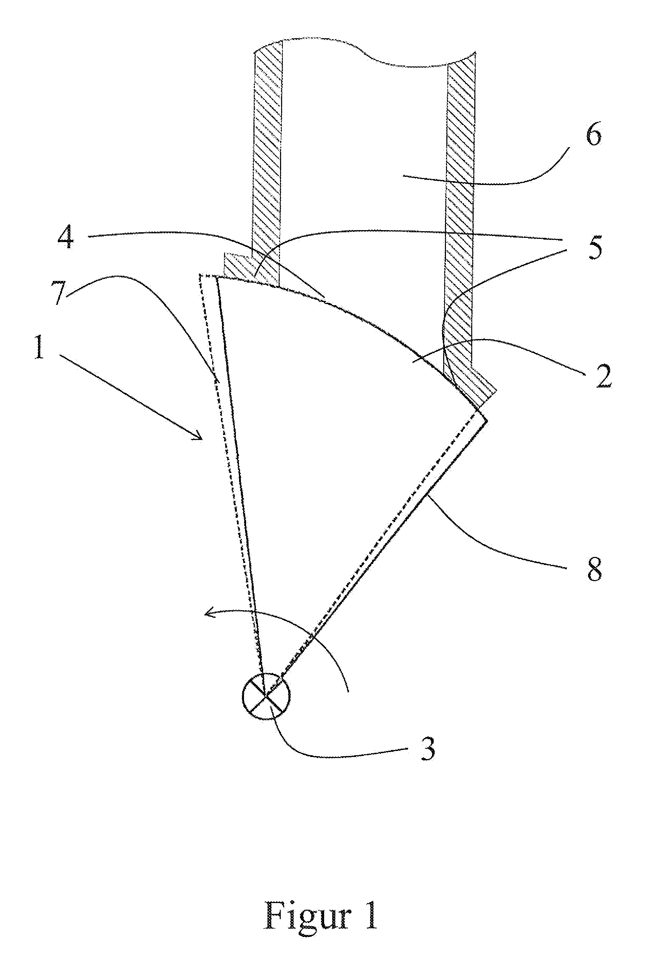

Figur 1 zeigt schematisch ein Klappenventil 1, mit einer Verschlussklappe 2, die exzentrisch um eine Drehachse 3 schwenkbar ist. Dabei weist die Verschlussklappe 2 eine Anlagefläche 4 auf, die im vorliegenden Fall mit einem Ventilsitz 5 zusammenwirkt. Die Verschlussklappe 2 verschließt im vorliegenden Ausführungsbeispiel eine Auslassöffnung 6.

Die zum Ventilsitz 5 gerichtete Anlagefläche 4 des Klappenventils 1 verläuft in einer gekrümmten Ebene, wobei die in Öffnungsrichtung weisende Seite 7 einen größeren Abstand zur Drehachse aufweist, als die in Schließrichtung weisende Seite 8 der Anlagefläche 4. Darüber hinaus beschreibt die Krümmung der Anlagefläche eine logarithmische Spirale, wodurch jeder Punkt auf der Dichtfläche der Anlagefläche beim Öffnen unter demselben Winkel von dem Ventilsitz 5 abhebt. Dehnt sich nun aufgrund von Wärmeeinwirkung die Verschlussklappe 2 aus, wachsen die Radien von der Drehachse 3 zur Anlagefläche 4 gemäß der Gesetzmäßigkeit R'=R (1+K(T-To)) T Temperatur, To Bezugstemperatur, k Wärmeausdehnungskoeffizient an. Die Form der Anlagefläche 4 der Verschlussklappe 2 ist dabei selbstähnlich, dass heißt sie bleibt Teil derselben logarithmischen Spirale. Dadurch passt die ausgedehnte Verschlussklappe 2 weiterhin zum Ventilsitz 5, wobei sich lediglich im Schließwinkel ein leichter Winkelversatz (siehe strichpunktierte Linie) einstellt.

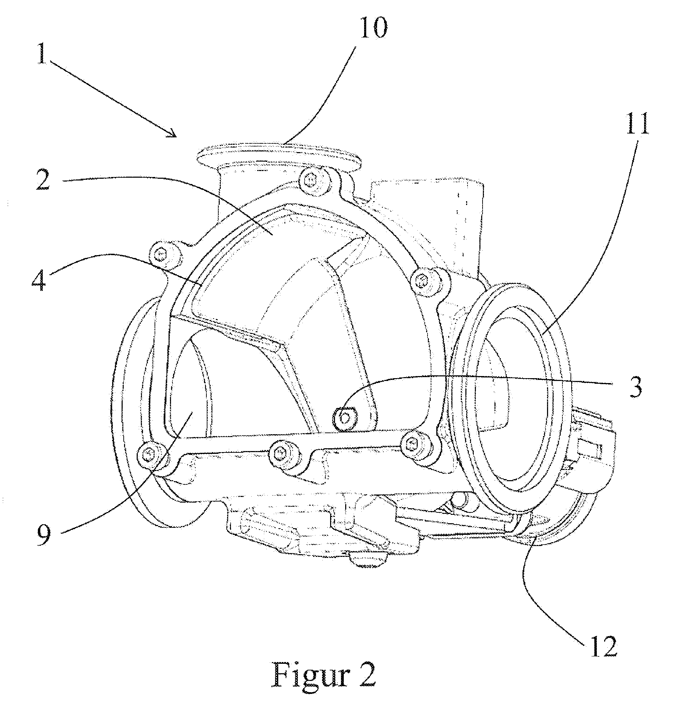

Figur 2 zeigt nun ein 3/2 Wegeventil 1, dass im Abgasstrang eingesetzt wird. Der Einlasskanal 9 ist hierbei mit einem nicht dargestellten Partikelfilter verbunden. Über den ersten Auslasskanal 10 kann Abgas über einen nicht dargestellten Abgaskühler zur Brennkraftmaschine zurückgeführt werden. Über den zweiten Auslasskanal 11 wird das Abgas zu einem nicht dargestellten Auspuffrohr weitergeleitet. Die Verschlussklappe 2 kann je nach Ansteuerung durch einen elektromotorischen Antrieb 12, der über die Drehachse 3 und einen Arm 13 mit der Verschlussklappe verbunden ist, den Auslasskanal 10 oder 11 verschließen.

Es sollte deutlich sein, dass die Erfindung nicht auf das beschrieben Ausführungsbeispiel beschränkt ist. Insbesondere ist es auch möglich, dass die Anlagefläche auf der konkaven Seite des Klappenventils ausgebildet ist. Hierbei würde sich lediglich die Drehrichtung bei der Ventilöffnung umkehren.

## Patentansprüche

1. Klappenventil, insbesondere für Brennkraftmaschinen, mit einem Gehäuse, dass mindestens eine Einlassöffnung und mindestens eine Auslassöffnung (6) aufweist, wobei eine Verschlussklappe (2) exzentrisch im Gehäuse gelagert ist, und derart um eine Drehachse (3) schwenkbar ist, dass die Verschlussklappe (2) mit deren Anlagefläche (4) mit mindestens einem Ventilsitz (5) zusammenwirkt,
**dadurch gekennzeichnet, dass**
die zum Ventilsitz (5) gerichtete Anlagefläche (4) in einer gekrümmten Ebene verläuft, in derart, dass bei einem von der Drehachse (3) abgewandten Ventilsitz (5) die in Öffnungsrichtung weisende Seite (7) der Anlagefläche (4) einen größeren Abstand zur Drehachse (3) aufweist, als die in Schließrichtung weisende Seite (8) der Anlagefläche (4) und das bei einem der Drehachse (3) zugewandten Ventilsitz (5) die in Öffnungsrichtung weisende Seite der Anlagefläche (4) einen geringen Abstand zur Drehachse (3) aufweist als die in Schließrichtung weisende Seite der Anlagefläche (4).

2. Klappenventil nach Anspruch 1, **dadurch gekennzeichnet, dass** eine Strecke senkrecht von einem Punkt P der Drehachse (3) zur Anlagefläche (4) der Verschlussklappe (2) eine ebene Kurve mit ständig größer werdenden Abstand beschreibt.

3. Klappenventil nach Anspruch 2, **dadurch gekennzeichnet, dass** die Kurve einen Abschnitt einer logarithmischen Spirale beschreibt.

4. Klappenventil nach einem der vorgehenden Ansprüche, **dadurch gekennzeichnet, dass** der Ventilsitz (5) und/oder die Anlagefläche (4) eine Kunststoffbeschichtung aufweisen.
